# EUROPEAN PATENT SPECIFICATION

(11) **EP 3 237 750 B1**
(45) Date of publication and mention of the grant of the patent: **16.10.2019**
(21) Application number: 15816655.3
(22) Date of filing: 21.12.2015
(51) Int. Cl.: F03D 13/40, B63B 35/00

(54) **WIND TURBINE BLADE HANDLING ABOARD A VESSEL**
WINDTURBINENROTORBLATTHANDHABUNG AN BORD EINES SCHIFFES
MANIPULATION DE PALE DE TURBINE ÉOLIENNE À BORD D'UN NAVIRE

(30) Priority: 23.12.2014 DK 201470824
(43) Date of publication of application: 01.11.2017
(73) Proprietor: MHI Vestas Offshore Wind A/S, 8200 Aarhus N (DK)
(72) Inventor: BOTWRIGHT, Adrian, 8471 Sabro (DK); URSELL-SMITH, Mark, 8400 Ebeltoft (DK); MAROTI, Stefan, 8200 Aarhus N (DK)
(74) Representative: Vestas Patents Department
(86) International application number: PCT/DK2015/050408
(87) International publication number: WO 2016/101957

(56) References cited:
- EP-A1- 1 321 671
- EP-A1- 2 572 976
- WO-A1-2013/095136
- WO-A1-2015/101375
- US-A- 4 072 120
- US-A1- 2011 142 589

## Description

### Background

The present invention relates to the handling of wind turbine blades aboard a vessel, in particular an installation vessel for wind turbines, especially offshore wind turbines. Long-distance shipping of wind turbine blades typically involves arranging the blades longitudinally inside the hull or transport compartment of a ship. For the purposes of installing wind turbines, especially offshore wind turbines, the main wind turbine elements such as tower, nacelle and blades or rotors are typically loaded aboard an installation vessel equipped with ancillary equipment for turbine erection. Installation vessels typically resemble a floating work platform more than a traditional transport ship. These vessels are generally loaded with turbine elements at a coastal location local to the planned turbine erection site. WO2013/095136 discloses a method for installing a wind turbine at an offshore location by using an installation barge, comprising the steps of providing an assembly structure arranged on a deck of the installation barge; mounting at least a hub on the assembly structure; fitting at least one blade to the hub while the hub is mounted to the assembly structure, wherein during fitting of the blade to the hub the blade is under an angle with the deck; lifting the completed hub-rotor assembly and mounting the hub-rotor assembly onto a preinstalled wind turbine tower section. EP2572976A1 discloses a transportation barge and US2011/142589A1 discloses another transportation system.

Wind turbine blades may be transported aboard vessels such as installation vessels by placing them in racks on a loading surface such as a deck. The blades are typically loaded onto and unloaded from such vessels in a horizontal orientation of the blades. This is because lifting equipment for loading or unloading is typically configured for horizontal handling of the blades. The dimensions of installation vessels are typically such that the blades may extend to some extent beyond the side of such vessels. This creates a hazard in the form of a risk of blade dipping in agitated waters or in case the vessel would encounter swell.

One previously suggested rack arrangement for blade stowage aboard a vessel has a capacity for carrying eighteen blades and comprises a fixed root rack and a facing fixed tip rack. Each tip and root rack comprises a set of fixed blade frame portions such that each blade rests substantially horizontally between a pair of blade frame portions effectively comprising a root frame and a corresponding tip frame. Each root or tip rack comprises six side-by-side columns of three blade frames per column. Rows of six frames are arranged in a vertical arrangement with an offset in the longitudinal blade direction at the root rack such that each root frame saddle is vertically clear of the one beneath it. Each tip frame strop can be disengaged from its tip frame to allow loading or unloading of a blade in a lower frame pair. This arrangement allows successive blades to be loaded into in a respective root frame saddle and a corresponding tip frame strop. The blades may thus be placed successively into the fixed frame pairs which make up the rack arrangement. In order to prevent damage arising as a consequence of blades dipping in the water during occasional rolling of an installation vessel, each root and tip rack includes a lower spacer frame fixed to a vessel deck and carrying the respective root or tip rack. This spacer frame ensures a minimum clearance between the stowed blades and the vessel deck, and hence, a minimum clearance between the blades and the water along that portion of the blades which overhangs the side of the transport vessel. This spacer frame arrangement reduces the blade dipping hazard in connection with vessel roll during agitated or rough conditions. A similar rack arrangement including nine pairs of fixed blade frames has also been proposed.

Developments in wind turbine technology have led to ever increasing blade lengths. In order to mitigate for the hazard of blade dipping, the height and overall size of spacer frames has had to increase in order to maintain an appropriate clearance between blade tips and water surface in case of vessel roll. This is very costly in terms of construction material and it wastes already limited space on board the vessel.

The present invention aims to improve blade handling aboard a vessel. In particular, the present invention seeks to improve blade handling and stowage aboard an installation vessel.

### Summary of the invention

An improved method for blade handling aboard a vessel is defined in appended claim 1. The method may in particular be carried out aboard an installation vessel. In particular, the method of the invention may comprise providing on a vessel, a blade rack arrangement configured to accommodate more than one blade, the rack arrangement comprising at least a root rack and a tip rack, wherein the root rack and tip rack between them define a blade support plane; and providing a jack acting between the vessel and one of the root or tip rack; and raising or lowering one of the root or tip rack aboard the vessel by means of the jack to thereby move the blade support plane through an elevation angle. The jack may comprise any suitable drive for raising or lowering a heavy bulky load such as a tip or root rack loaded with blades. The jack may preferably be powered. A suitable drive element for a jack may be a hydraulic drive. By raising or lowering a root or tip rack aboard a vessel by means of a jack, to thereby move a blade support plane through an elevation angle, a substantial improvement in the transportation configuration can be achieved using simple means. Increased safety and reduced costs can thereby result, while at the same time preserving the advantages of existing blade loading and unloading arrangements into or out of a blade rack arrangement. The method of the invention may give rise to numerous potential advantages. For example, it ensures that blades may be stowed on board in a different angular orientation than the orientation in which they are loaded or unloaded. It also ensures that a stowage angle of the blades can be selected, according to criteria such as vessel type or expected water, sea or weather conditions. In other words, it can ensure blade stowage optimisation independently of certain blade loading and unloading considerations. The method also enables a maximisation of the use of limited space aboard a vessel, even allowing for transportation of more blades on a given deck space or height. The invention further allows the provision of lower, smaller spacer frame arrangements thereby saving expense.

Further preferred method features are defined in subclaims 2-15.

In an optional, preferred aspect of the invention, the other one of the root or tip rack is substantially not raised or lowered. Accordingly, the invention may encompass raising or lowering a tip rack while maintaining the root rack substantially unmoved in relation to the loading deck. Conversely, the root rack may be raised or lowered while the tip rack is maintained substantially unmoved in relation to the loading deck. In a further optional aspect, the root or tip rack which is maintained unmoved, may preferably be positioned atop a static base frame, supported at a height above a loading deck of said vessel. Accordingly, one effect of raising a moveable one of a tip or root rack in relation to a static base frame at an opposite, facing rack is to cause the tip of any blade supported in the relevant rack arrangement to be raised to a level higher than the height of the static base frame above the loading deck. More particularly, the clearance height between the water surface outboard said vessel and the tip of a blade in a blade rack arrangement aboard said vessel will be greater or significantly greater than the base frame height above the vessel deck. Moreover, since the blade support plane is thereby inclined, the clearance between a blade and the water surface outboard the vessel progressively increases along the blade length to its tip. Advantageously therefore, the present invention may lend itself to the safe handling and transportation of longer blades. Inclination of the blades makes blade length independent from required spacer frame height.

In a further optional aspect, each tip or root rack may be comprised of one or more columns of root or tip frame elements, wherein each such column comprises more than one frame element. In particular, each frame element is preferably configured to support a respective root or tip portion of a single blade. Preferably, a root or tip rack comprises multiple stacked frame elements in a column. Still further optionally, each root or tip frame element may be separably connectable to one or more adjacent frame elements in said root or tip column. In embodiments, the frames may be configured to allow secure, separable lateral connection between columns of frame elements. The frame elements are preferably stackable in a modular configuration to create stacked columns of different frame heights depending on the number of blades to be loaded in any rack arrangement. One or more columns of stacked root or tip frames may be described as a root or tip rack. A root or tip rack may thus comprise one or more columns of stacked frames, arranged side by side. A rack arrangement may in particular comprise a tip rack and a facing root rack.

In a further optional aspect, the method may include separably connecting adjacent frame elements by means of fasteners. These may be of any suitable form such as e.g. bolts.

In a further optional aspect, the method may additionally comprise providing a pivot under the other one of said root or tip rack. The provision of this pivot allows a certain rotational movement of the relevant rack during raising or lowering of an opposite, i.e. a facing root or tip rack. This tends to prevent a shift in the angular position of a supported blade portion relative to a frame element in a rack or to any fixtures in which it is supported while a relevant rack is being raised or lowered. Moreover, the relative mutual position of opposing root or tip racks may thereby remain substantially unchanged during raising or lowering of a rack. Preferably, a pivot located at the foot end of a rack may be provided in the form of a tiltable platform on which the root or tip rack is supported or fixed. Such a pivot may perform the function of an element more generally known as a skid.

According to a further optional embodiment, the jack may comprise a drive element and a rotatable rack spacer capable of rotating between a lowered support position and a raised support position. A lowered support position of the rotatable rack spacer may in particular correspond to a lowered position of a root or tip rack supported on said spacer. A raised support position of the rotatable rack spacer may in particular correspond to a raised position of a root or tip rack supported on said spacer. A suitable rotatable rack spacer may be directly or indirectly connected both to a linear drive of a jack and directly or indirectly to a root or tip rack. Actuation of a linear drive of a jack may preferably urge the rotatable rack spacer in rotation, thereby changing its orientation in a vertical plane such that a separation between a root or tip rack and a vessel loading deck is thereby correspondingly or proportionally changed. The rotatable spacer may exhibit a locked, lowered support position and/or a locked raised support position. In this context, the term "locked...position" may denote a position of the rotatable spacer in which the root or tip rack rests in either a lowered or raised position without additional external assistance. In embodiments, during a raising or lowering action of a root or tip rack, the drive element of a jack may move a driving end thereof though a greater linear distance than the height change of the relevant rack. Preferably, in embodiments the rotatable spacer is positioned between the loading deck of the vessel and a relevant rack.

In embodiments, the elevation angle through which the blade support plane may be moved by the action of the jack is between zero and of at least three degrees, preferably between zero and at least four degrees, still preferably between zero and at least five degrees, still preferably between zero and at least seven degrees, still preferably between zero and at least ten degrees. Preferably, according to aspects of the invention, there may be provided a connecting boom between the root rack and the tip rack. In embodiments, there may optionally be provided more than one boom between a relevant tip and root rack. This option may be preferred where there are multiple columns of root or tip frames arranged side-by-side. The boom may counteract any tendency for the root and tip racks to move together or apart during a raising or lowering action of the jack or following such a raising or lowering action. Preferably such a boom may rotationally connect the jack with a pivotable skid supporting the other one of said root or tip rack, i.e. the relevant rack not being raised or lowered by the action of the jack. Still further, the boom may be configured to cause rotation of the skid or tiltable support platform as a result of an extending or retracting action of the jack beneath an opposite i.e. facing rack.

The method also encompasses a jack assembly on a wind turbine installation vessel capable of raising or lowering a rack of wind turbine blade root or tip support frame elements according to the defined method, wherein the jack comprises an assembly including a lifting platform driven by a drive device and being positionable at a root or tip rack to be raised or lowered. The jack, or jack assembly is thereby capable of putting into effect the method of the invention, in particular: by raising or lowering a tip or root rack of a blade stowage rack arrangement, the blade support plane may be moved through an elevation angle. A blade stowage rack arrangement and any blades supported therein may thereby in particular be tilted between a blade loading/unloading position and a blade transport position. Blades being transported on an installation vessel comprising a jack arrangement of the invention may thereby be exposed to a reduced risk of dipping.

Optionally, the jack may further comprise a skid positionable beneath a rack which is opposite to i.e. facing the relevant rack on a lifting platform. Such a skid may in particular be a pivot and may be in the form of a tiltable platform. A jack may optionally comprise a pivotable skid in the form of a tiltable platform, rotatably coupled to the lifting platform by a coupling linkage such as a boom. The coupling may in particular help to preserve the relative position of opposing racks during raising or lowering of a jack.

The drive device of a jack may in particular be a linear drive and may be hydraulic such as a hydraulic piston. Alternatively, other linear drive types may be used such as a worm shaft and collar or a pneumatic drive. The drive may be coupled to a rotatable rack spacer or lifting platform. A rack spacer may for example be rotatably coupled to a pivot joint at a root or tip rack and may additionally be rotatably coupled to a linear drive of the jack.

In embodiments, a rotatable rack spacer may be configured to exhibit a raised rack support position and a lowered rack support position. The jack assembly may be configured to rotate the rotatable rack spacer between a raised and a lowered position by means of its linear drive. Optionally, the raising or lowering action of a root or tip rack may be effected by driving a portion of the rotatable rack spacer along a support surface, such as a loading deck of a vessel while another portion of the rotatable rack spacer may be caused to pivot about a pivot joint at a root or tip rack.

It may be beneficial to provide a boom between at least one element of a root rack and at least one element of a tip rack or between platform elements on which they are supported and preferably fixed. This may prevent the tip or root rack being pushed along the blade by a pushing action of the linear drive device during raising of the relevant rack. The boom may also act to generally relieve stresses on the blades during raising or lowering of a relevant rack.

The invention as well as particular aspects thereof is furthermore explained with reference to non-limiting examples shown by way of illustration in the appended drawings.

These show:
Fig. 1: a prior art type blade stowage rack arrangement.
Fig. 2: a schematic illustration of a blade stowage rack arrangement and jack assembly according to aspects of the invention.
Fig. 3: a schematic side view of aspects of the jack assembly shown in Fig. 2.
Figs. 4a) and b): a schematic example of a jack assembly arrangement according to aspects of the invention.
Figs. 5a) and 5b): a schematic illustration of a jack assembly and rack arrangement according to aspects of the invention.
Figs. 6a) and b): a schematic illustration of a jack assembly and rack arrangement according to aspects of the invention.
Figs. 7a) and b): a schematic illustration of a jack assembly and rack arrangement according to aspects of the invention.
Fig. 8: a schematic illustration of an example of a vessel according to aspects of the invention.

The term "rack arrangement" is a collective term intended to denote a blade storage construction providing a support structure for wind turbine blades with support elements at or towards the blades' root ends and at or towards their tip ends in the form of a respective, facing root and tip rack. So-called "tip end" support may in particular be provided by means of a tip frame or tip rack at or near a mid-portion of a blade, towards the blade tip. So-called "root end" support may in particular be provided by means of a root frame or root rack at or near a root end of a blade. Preferably, a root end support frame or root rack is provided at the blade root end. A root or tip rack may be unitary or modular although the modular type may be preferred. Each blade may preferably be stored in a frame pair. A root or tip rack may be established by providing one or more frames in a fixed arrangement on a working platform such as on a loading deck of a vessel. The rack arrangement may be progressively loaded with blades by loading blades into successive frame pairs of the rack arrangement. Alternatively, a rack arrangement may be created by successive addition of frame modules to one another aboard a vessel. In such a case, the blades will typically be pre-loaded each in a tip and root pair of single frame elements or several blades in multiple pairs of frame elements. Here the term: "vessel" designates a floating vessel for transportation over water, especially a maritime vessel.

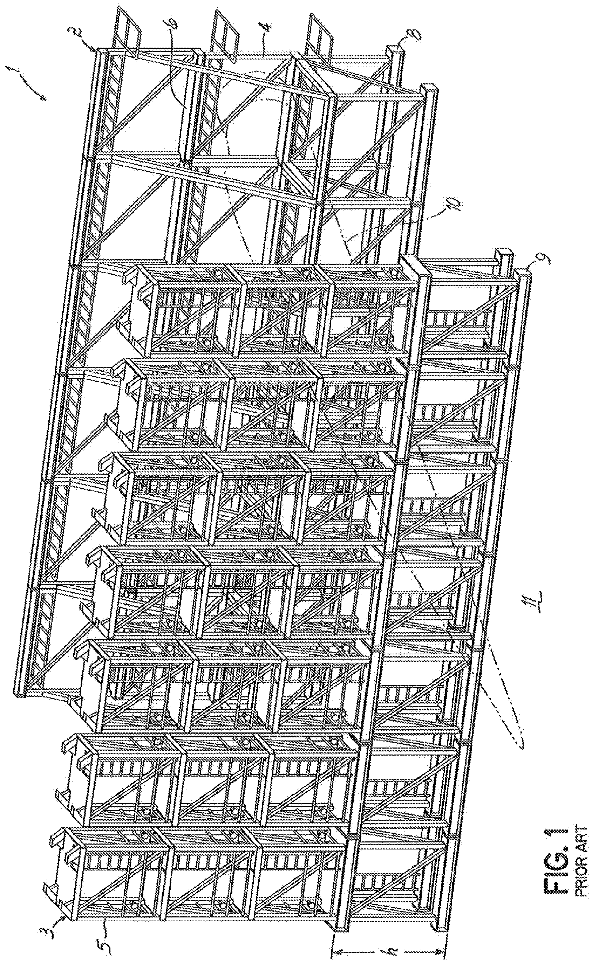

In Fig. 1, is illustrated a prior art type blade rack arrangement 1 having a root rack 2 and a tip rack 3. The blade rack arrangement 1 is supported on and fixed to a loading deck 11 of a transport vessel (not shown). Each rack 2, 3 can accommodate the respective root or tip ends of eighteen blades, one of which is indicated by a dotted line 10. Blades may be arranged in three superposed rows of six blades or - expressed differently - in six side-by-side columns of three superposed blades. The rack arrangement 1 is comprised of eighteen fixed frame pairs 4, 5. Each root frame 4 has a prop 6 for supporting the root end of a respective blade. Each tip frame 5 is flanked on either side by a support structure. The root frames 4 of each row are fixed together and offset in a longitudinal direction of the blades from the frames 4 in the row above or below it. This allows blades to be slotted into position in the lowermost frames without being blocked by the frames above. The tips are held in place by removable strops (not shown) at each level in the columns of tip frames 5. The rack arrangement 1 illustrated in Fig. 1 does not exhibit modular type single blade-frames 4, 5 in the respective racks 2, 3, instead, each frame 4, 5 is fixed to one or more neighbouring frames 4, 5. A first blade 10 in a column is put in position on a strop (not shown) in a lowermost tip frame 5 and on a saddle 6 in a lowermost root frame 4. A further strop (not shown) is then added to a tip frame 5 immediately above the lowermost, now occupied, tip frame 5. A second blade (not shown) is then put in position in a root saddle 6 and in a tip strop in a frame pair immediately above the lower frame pair 4, 5 in the same column, and so on until potentially the rack arrangement is filled. The racks 2, 3, each of unitary construction, are designed to be fixed in place on a vessel loading deck (not shown). In order to prevent blade dipping in water, the root and tip racks 2, 3 each include a spacer frame 8, 9 which provides a clearance h between the stowed blades (not shown) and the surface of the loading deck and thereby also a clearance between the blades and the water surface.

The term "loading" may herein include bringing a blade on board optionally with or without a root or a tip frame element. It may optionally further include securing a blade in a respective root or tip frame in a rack arrangement on board. It may further include complementing a root or tip rack on board by addition of one or more frame elements. The term "unloading" may herein include removing a blade from on board optionally including unloading a blade from respective frames on board or optionally by unloading a blade complete with a root or tip frame. The term "blade handling" may include any or all these operations and may additionally include stowing of blades. An installation vessel may refer to a vessel specially adapted for providing a working platform for offshore wind turbine erection and optionally, ancillary equipment therefor such as lifting equipment, e.g. one or more cranes. A loading deck of an installation vessel may refer to any support surface aboard capable of, or suitable for, receiving all or part of a blade rack arrangement, preferably permitting loading or unloading of blades to and from said rack arrangement.

In the present application, the term "blade" is intended to denote that part of a wind turbine rotor which extends from its hub. A reference herein to a blade is not intended to be a reference to a rotor as a whole.

A blade support plane denotes a plane in which the main longitudinal axis of a relevant blade extends and in which the blade is supported in a respective root and tip frame element of a rack in a blade rack. Previously, that plane was a fixed transportation plane. In the present invention, that plane is tiltable.

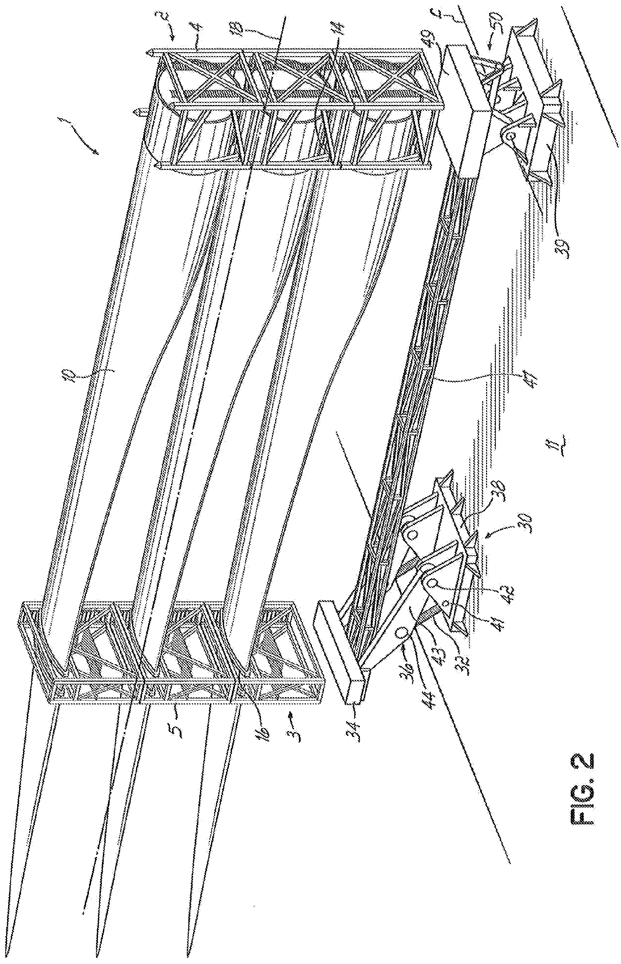

Fig. 2 shows a blade rack arrangement 1 consisting of a root rack 2 and a tip rack 3. The root rack 2 comprises three blade root frames 4. Similarly, the tip rack 3 comprises three blade tip frames 5. In the case illustrated in Fig. 2, the frames 4, 5 are modular, each module comprising a single frame 4 or 5. Each module or frame 4, 5, is connectable to a neighbouring module or frame via fasteners (not shown in Fig. 2). Also shown in Fig. 2 are blades 10 pre-loaded into each of a root and tip frame pair 4, 5. A seat 14 in a root frame 4 supports the root end of a blade 10 while the tip portion of a blade 10 is supported in a saddle 16 in a tip frame 5. The blades 10 are supported in a blade support plane 18 suggested by the broken line which runs along a blade longitudinal axis, lying in that plane which also extends laterally of the broken line (18). In the example of Fig. 2, entire columns of frames 4, 5 in the form of racks 2 or 3 may be loaded to form a rack arrangement 1 on a vessel loading deck 11. Alternatively, each frame pair 4, 5, may be loaded successively to make up respective racks 2, 3 and rack arrangement 1. In the embodiment illustrated in Fig. 2, the frame pairs 4, 5 are loaded on to the transport vessel loading deck 11 with blades 10 in place in each tip and root frame 4, 5 of a pair. In other embodiments, blades 10 may be loaded into frame pairs 4, 5 already in place on a vessel deck 11.

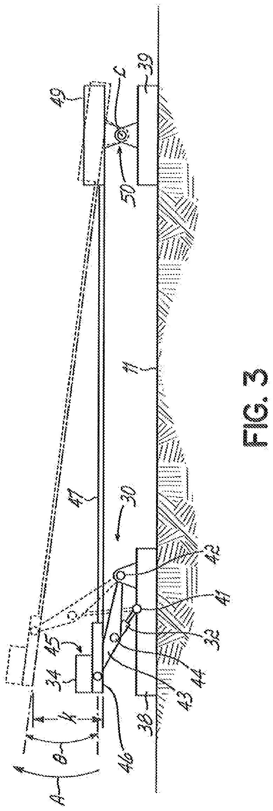

Also shown in Fig. 2 is an example of a jack assembly 30, comprising a linear drive 32 coupled to a lifting platform 34 via a linkage 36. In general, the term *jack* may refer to a lifting drive means. The term "jack" as used herein is a collective term intended to designate a jack apparatus or jack assembly configured for lifting or lowering a blade rack 2 or 3 and thereby shifting the elevation angle of a blade support plane 18 of a rack arrangement 1. Also shown for illustrative purposes in connection with Fig. 2 is a schematic diagram - Fig. 3 - of a jack assembly 30 having a linkage 36. The jack assembly 30 is configured for mounting on a loading deck 11 of an installation vessel 100 and for being positioned beneath a tip or root rack 2, 3 of a rack arrangement 1. In the illustration of Fig. 2, the lifting platform 34 is shown positionable below the tip rack 3 such that the lowermost region of the tip rack 3 is supported by or on the lifting platform 34. In other embodiments, the lifting platform 34 may be positioned in the same way below a root rack 2. Preferably, although not shown in Fig. 2, the lowermost element of a rack 2 or 3 such as a lowermost frame 4 or 5 may be fixedly connectable to a lifting platform 34 via fastening elements.

The exemplary linkage 36 shown in Fig. 2 comprises a lifting arm 43 and a slidable platform coupling 45. The linear drive 32 is coupled to the lifting arm 43 at a pivot point 44 which is preferably arranged between two extremities of the lifting arm 43. Both the linear drive 32 and the lifting arm 43 may be preferably pivotably coupled to a deck interface which may be in the form of a base 38. The base 38 as shown comprises two pivot points 41 and 42. The linear drive pivot point 41 is spaced a distance apart from the lifting arm pivot point 42. The pivot points 44, 41 and 42 all act along parallel pivot axes. Preferably, the lifting arm 43 is coupled to the slidable platform coupling 45 at an end opposite to its base pivot point 42. The slidable coupling 45 may co-operate with a slideway 46 of the lifting platform 34 to allow the platform 34 to maintain its position in relation to a rack 2, 3 during raising or lowering thereof. The platform 34 may in particular be raised or lowered by actuating linear drive 32 which acts on the arm 43 via pivot point 44 to rotate it about its base pivot point 42 thereby changing the height of the distal end of the lifting arm 43 in relation to the jack assembly base 38. This has the effect of translating the slidable coupling 45, which is then caused to slide in the slideway 46 of the lifting platform 34.

The linear drive 32 and each displaceable element of the linkage 36, is shown in two positions in Fig. 3, namely a relatively lowered position and a relatively raised position. In its relatively raised position, the lifting platform 34 is raised through a distance k above its relatively lowered position.

In embodiments, also shown in Figures 2 and 3, the jack assembly 30 may co-operate with a skid in the form of a pivot 50 positionable at the other rack 2, 3, whichever is not on the lifting platform 34. In the case illustrated, the pivot 50 is positioned at, and below the root rack 2. Preferably, the rack 2 or the lowermost frame 4 of the rack is fixedly connectable to the pivot 50 via fastening elements such as bolts or clamps or pins or equivalents. The pivot 50 may comprise a tiltable platform 49 and a base 39. The base 39 and the tiltable platform 49 may be hinged together along a hinge axis c. Preferably, although not shown in Fig. 2 or 3, the lowermost element of a rack 2 or 3 such as a lowermost frame 4 or 5 may be fixedly connectable to a pivot platform 49 via fastening elements such as bolts or clamps or pins or equivalents. In the embodiment of Fig. 3 or 2, the pivot base 39 and the jack assembly base 38 are shown fixed to the loading deck 11 by welding. Other fixing arrangements may be contemplated for fixing the bases 38 or 39 to a deck 11. In some cases, one or both bases 38 or 39 may be supported on a loading deck 11 by means of a base frame such as a spacer frame 8, 9 (not shown in Fig. 2 or 3) the dimensions of which may vary.

In aspects of the invention, the pivot 50 may be rotatably coupled to the jack assembly 30, in particular, to the lifting platform 34. This may be achieved in any suitable manner. In preferred aspects of the invention, the lifting platform 34 may be rotatably coupled to the pivot 50 via a boom 47. In alternative embodiments, a pivot 50 may be associated with a drive mechanism configured to synchronise the tilt angle of the pivot 50 with the movement or position of the lifting platform 34. In preferred embodiments, the rotatable coupling between the lifting platform 34 and the pivot 50 may be capable of driving the rotation of the pivot platform 49 of pivot 50.

In the embodiment of Figs. 2 and 3, the linear drive 32 has one end captive and fixed at the drive's base pivot point 41 while its other end is captive at translatable pivot point 44. Upon actuation of linear drive 32 it extends or contracts in length, thereby causing the lifting arm 43, pivot points 44 and slidable coupling 45 to move through an arc about the lifting arm's base pivot point 42. The resulting change in height of the remainder of the lifting arm 43 causes raising or lowering of the lifting platform 34. Given that the height of the pivot 50 is not significantly altered during actuation of the linear drive 32, the effect of raising or lowering the lifting platform 34 is to change the effective elevation angle of the blade support plane 18.

As shown in Fig. 3, and with reference to Fig. 2, the operative coupling between lifting platform 34 and pivot 50 results in the movement of the lifting platform 34 being along an arcuate path A about hinge axis c through an elevation angle *θ*. In embodiments, the angle *θ* may be a depression angle although the terms elevation angle and depression angle are not differentiated in this specification because they both denote a change in the inclination of a blade support plane with respect to the horizontal. With blade rack arrangement 1 and racks 2, 3 in place on the lifting platform 34, the actuation of the linear drive 32 has the effect of translating the support plane 18 of the blades 10 through elevation angle *θ*.

The linear drive 32 may be any suitable linear drive device such as a hydraulic piston or worm shaft and collar. Preferably, the linear drive 32 is controlled by a control device (not shown) and may be actuated remotely or automatically or both. Preferably the degree of inclination applied to the blade support plane is infinitely variable. A single column of frames 4, 5 is shown in each root or tip rack 2, 3. In embodiments (not shown) there may be more than one column of frames 4, 5 in each root or tip rack 2, 3. In embodiments, a jack assembly 30 may be provided for each column of frames or there may be more than one column of frames supported on a single lifting platform 34. In other words, each root or tip rack 2, or 3 may be associated with one or more jacks 30. Similarly, in embodiments, a pivot 50 may be provided for each column of frames in a rack or there may be more than one column of frames supported on a single pivot 50.

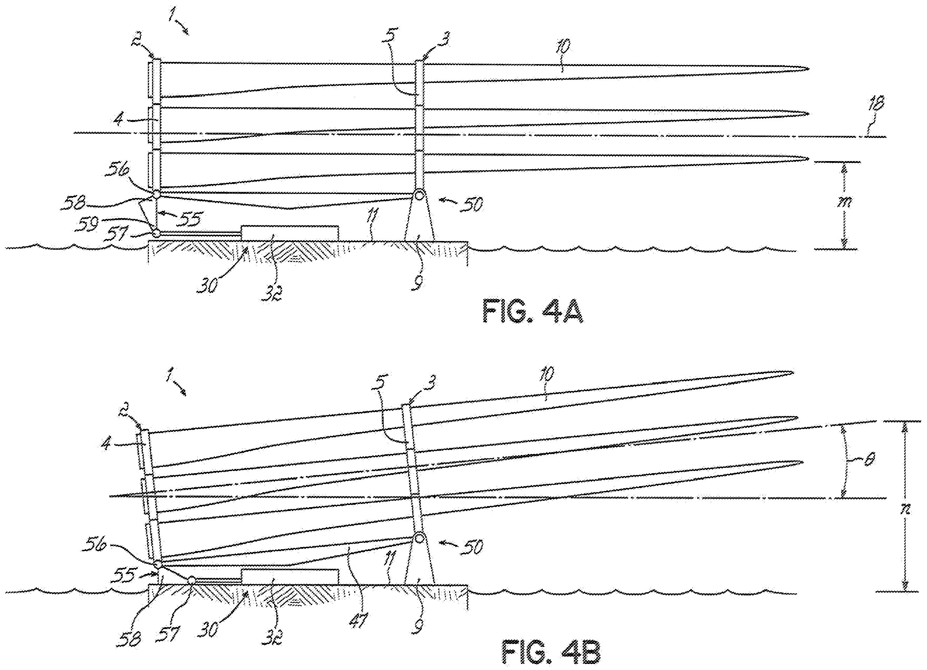

A further example of aspects of the invention is illustrated in Figs. 4a and 4b. A set of blades 10 is shown supported in a rack arrangement 1 comprising a root rack 2 and a tip rack 3. The frames 4, 5 in each rack 2, 3 may be modular single frames, modular multiple frames or the racks may comprise multiple frames which are not of modular type and which may in particular be unitary - i.e. not separably connected together. Fig. 4a shows a set of blades 10 supported in the rack arrangement 1 in a loading or unloading position, namely with a generally lateral blade support plane including or parallel to the longitudinal support axis 18. In this position, the blades are untilted and extend over the edge of the loading deck 11 above the surrounding water at height m above its surface. The tip frame rack 3 is supported at a height above the deck 11 by a spacer frame 9. Fixed atop the spacer frame 9 is a pivot 50 supporting the tip rack 3. At the blade root end, the rack arrangement 1 comprises a root rack 2 in which the blades 10 are supported. A rotatable spacer 55 acts as a support element between the deck 11 and the root rack 2. The rotatable spacer 55 is pivotably connected at a rack pivot point, to the root rack 2 via a pivot 56 and pivotably connected to a linear drive 32 via a pivot 57 at a drive pivot point on said rotatable spacer spaced a distance apart from said rack pivot point. The rack and drive pivots 56, and 57 preferably act along parallel axes. A retraction action of the linear drive 32, which may be any suitable drive such as a piston or worm shaft type drive, has the effect of pulling a toe portion 59 of the spacer 55 away from beneath the rack 2 as the spacer pivot 56 is pulled in a retraction direction of the linear drive 32. Since the rotatable spacer 55 is pivotably connected to the rack 2, this retraction action of the linear drive 32 has the simultaneous effect of lowering the rack 2 and bringing the spacer 55 to rest in a lowered position with the blade support plane 18 inclined in a transport position relative to the loading/unloading position. A transport position of the blades 10 is illustrated in Fig. 4b, with the blade tips extending over the edge of the deck 11 and above the water surface at a height n, where *n*>*m.* The action of the linear drive 32 has the effect of tilting a blade longitudinal axis through an infinitely variable angle *θ*. In preferred embodiments, the rotatable spacer 55 has a heel portion 58 on which the rack 2 may come to rest in a fully lowered position of the jack assembly 30. In its fully raised position, the jack assembly 30 may bring the rotatable spacer 55 into a standing position, supporting the rack 2 substantially upright on its toe portion 59. In the embodiment shown in Figs. 4a and 4b, the pivot 50, at one rack, is coupled to the base of an opposite rack via a coupling. The illustrated coupling is in the form of a boom 47 capable of driving a tilting action of the pivot 50 by virtue of a raising or lowering action on an opposite rack.

According to aspects of the method of the invention, the rack arrangement 1 may thereby be moved between a transport position of the blades 10 and a loading/unloading position of the blades by changing the inclination angle of the blade support plane 18. In preferred embodiments, the angle *θ* may be infinitely variable and may be adjusted between zero and five degrees. Still preferably, the angle *θ* may be adjusted between zero and ten degrees. Still further preferably, the angle *θ* may be adjusted between zero and twenty degrees. In embodiments, the angle *θ* may be adjustable by between zero and more than 20 degrees.

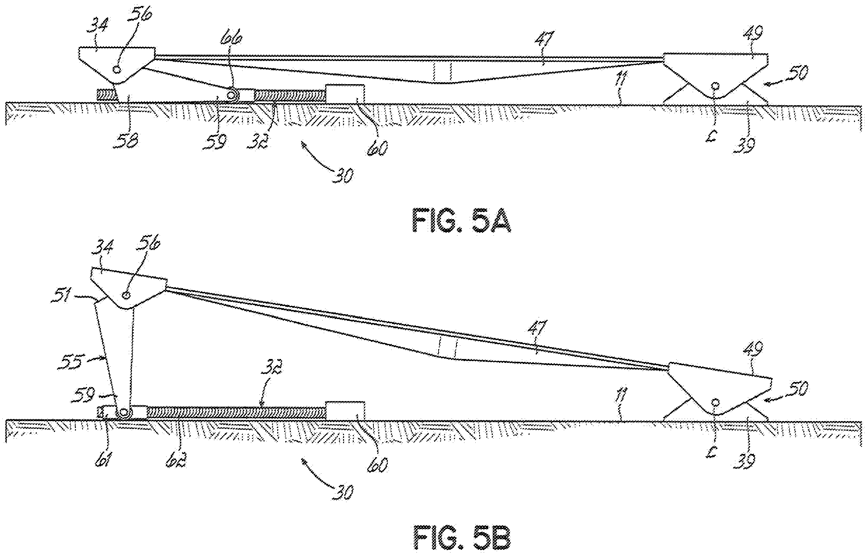

Figs. 5a and 5b indicate additional detail of a jack 30 according to aspects of the invention. In this arrangement, it may be preferred that the tip rack 3 rests upon the lifting platform 34 of the jack 30. The jack 30 may thereby be in its lowered position during loading/unloading while it is in its raised position during transportation. This is converse to the arrangement shown by way of example in Fig. 4a or 4b although the same effect is achieved. This configuration may be applied to any of the other illustrated exemplary embodiments. One advantage of the arrangement of Figs. 5a and b may reside in there no longer being a need to provide a rack spacer frame 9 beneath either tip or root rack 2, 3 of a rack arrangement 1. This may enable additional space maximisation and a reduction of materials for the transport rack arrangement 1. Also illustrated is a pivot 50 and a coupling between a pivot 50 and the jack assembly 30 shown here in the form of a boom 47. In the example illustrated, the boom 47 is capable of driving the pivot 50 in rotation as the jack assembly 30 is actuated in a raising or lowering direction. A controllable linear drive 32 comprises an actuator unit 60 coupled to a worm shaft 62 and collar 61. The collar 61 may ride forcibly back and forth up and down the length of the worm shaft 62 thereby urging the spacer 55 between a raised and a lowered position. The actuator unit 60 may include a motor such as an electric motor and may be associated with control means (not shown). A roller 66 at the toe 59 of the rotatable spacer 55 may assist movement of the spacer between a raised and a lowered position of the relevant rack 2. In particular, the rotatable rack spacer 55 may be moved between a raised and a lowered position by movement of a portion of the spacer 55 along a support surface of a vessel. In the present case, the support surface may be a loading deck 11. More in particular, a toe portion 59 of the spacer 55 may be moved along a support surface 11. The movement of a portion of the spacer 55 along a support surface may be assisted by the provision of a roller 66 on the spacer 55, preferably at a toe portion 59 of the spacer 55.

In Fig. 5b, the spacer 55 is shown standing upright on its toe portion 59 and thereby in a position in which it raises a relevant rack to its maximum extent. In embodiments, a locking raised position of the rotatable rack spacer 55 may be envisaged. Accordingly, the linear drive 32 may be driven in a raising direction of a root or tip rack 2, 3 or lifting platform 34 beyond the maximum height position of a spacer 55. In such a case, the rotatable spacer 55 may be caused to rotate to its maximum extent about the rack pivot 56 until a spacer shoulder 51 comes to rest against the rack 2, 3 or against a lifting platform 34. In Fig. 5b, the spacer shoulder 51 can rest against lifting platform 34 such that a gravitational effect on the rack or on the lifting platform 34 would tend to urge the rotatable spacer 55 in a rotation direction about the rack pivot 56 which rotation direction is prohibited by the spacer shoulder 51 abutting against the relevant rack or lifting platform which it supports. This locking position of the rack spacer 55 is not shown in Fig. 5a or 5b.

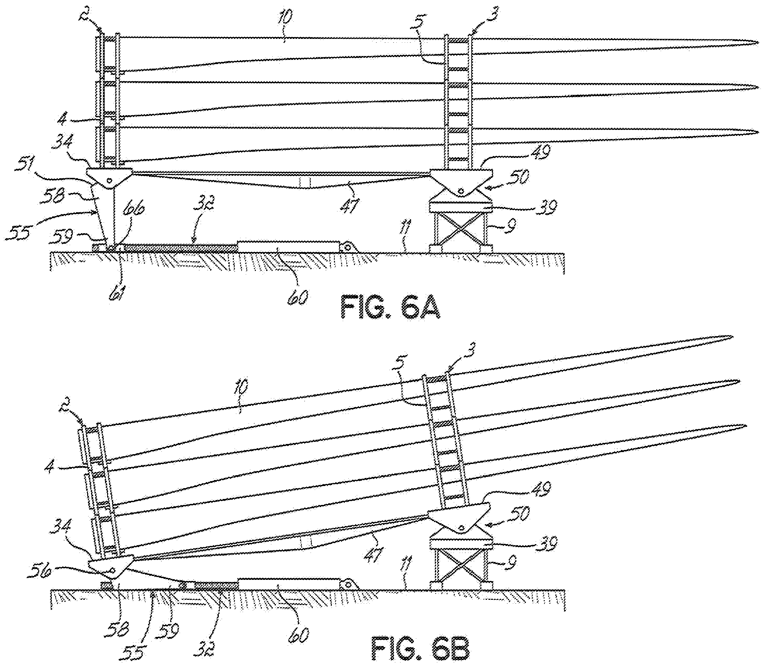

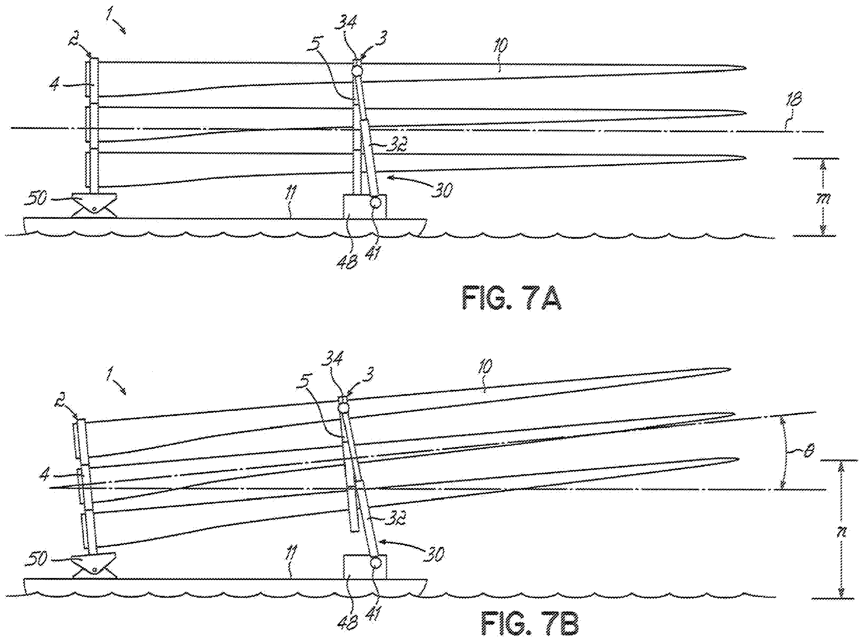

In the illustration Figs. 6a and 6b, the jack assembly 30 is shown having a piston type linear drive 32 and supporting a root rack 2 via a lifting platform 34. Figure 6a shows a rotatable rack spacer 55 in a raised locking position with its shoulder 51 abutting the lifting platform 34 and thereby being blocked in position by gravity. Fig. 6b shows, conversely, the rack spacer 55 blocked by gravity in its lowered position with the shoulder 51 abutting the loading deck 11. In other respects, the illustration has a mechanism similar to Figs. 4a and 4b. In the arrangement shown in Figs. 7a and 7b, a jack assembly 30 has linear drive 32 in the form of a hydraulic piston supporting a rack 3 via a lifting platform 34 shown here in the form of a pusher at a distal end of the linear drive 32, engaging a lifting pin on a rack 3. The linear drive may be anchored to the loading deck 11 or it may be associated with a resting block 48. The extension or retraction action of the linear drive 32 may be controlled by control elements (not shown) and preferably allows an infinitely variable angular adjustment of the blade support plane suggested by the numeral 18 between zero and about twenty degrees from the horizontal, or, at least, from the plane of the loading deck 11. As may be seen from the indications in Figs. 7a and 7b, in this and other embodiments, where elevation angle *θ* > 0, then distance *n* > m. In other words, where the elevation angle of the blade support plane 18 is greater than zero, the blade tip clearance n is greater than the blade tip clearance m in a horizontal arrangement of the blade support plane 18.

It can be seen from all the figures 2 to 7 that the racks 2 or 3 maintain their shape and dimensions when tilted by the jack assembly 30 as between a raised and a lowered position or as between a loading/unloading position and a transport position. This may preferably be guaranteed by a coupling 47 in the form of a boom although this is not essential in all embodiments.

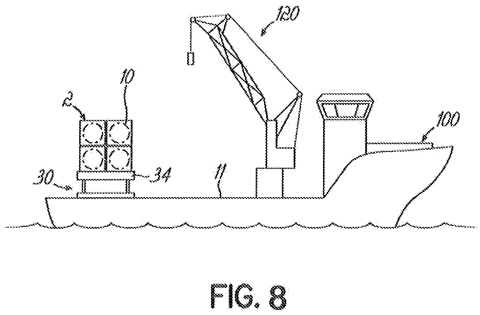

Figure 8 shows a schematic illustration of a root rack 2 in which blades 10 are located, positioned on a jack 30 at the loading deck 11 of a transport vessel 100 also equipped with a crane 120. The lifting platform 34 shown in this case carries two columns of stacked frames. A pivot 50 (not shown in this figure) is arranged correspondingly. In other embodiments, a lifting platform 34 or pivot 50 may carry a single column of frames. In such embodiments, there may be multiple jacks 30 arranged side-by-side for accommodating multiple columns of frames 4, 5. In still further embodiments, a lifting platform 34 or pivot 50 may carry three or four or five or more columns of frames.

During use, the blades 10 may be loaded onto the vessel 100 for example from a quayside and preferably by means of a crane 120. Generally, when loading or unloading blades 10, these are suspended from a crane 120 with the blade main axis lying in a horizontal plane. The blades 10 may be placed into frames 4, 5 of an existing blade rack arrangement 1 on board a vessel 100 with a root or tip rack 2, 3 of the blade rack arrangement 1 being associated with a jack 30 on the vessel 100. Alternatively, the blades 10 may be transported from a quayside in single or multiple transport frame elements 4, 5 which, when placed on a loading deck 11 of a vessel equipped with a jack 30, make up a respective root and tip rack 2, 3 and thereby constitute a rack arrangement 1. In all cases, at least one rack 2, 3 of a rack arrangement 1 is positioned in relation to a jack 30 such that it may be raised or lowered by the action of the jack 30. The blades 10 are transported by crane 120 and placed in the rack arrangement 1 in a horizontal orientation. Thus, immediately after loading into the rack arrangement 1, each blade initially lies with its main axis in a horizontal support plane defined by the relative arrangement of facing frame elements 4, 5 within each rack arrangement 1. As mentioned previously, a jack 30 may be configured to lift or lower a single column of frames 4, 5 or multiple columns of frames 4, 5 standing side-by-side. Once a relevant blade or relevant group of blades for a shipment is loaded aboard, the jack 30 may be actuated (raised or lowered) to thereby raise or lower a relevant rack 2, 3, moving the blade support plane 18 through an elevation angle *θ* such that the blade tips are raised. The blade shipment may be transported to an erection site, which may in particular be an offshore site. Alternatively, the blade shipment may be transported by vessel 100 to any desired unloading site. Upon reaching the relevant unloading site, the jack 30 may once again be actuated to move the blade support plane 18 through an elevation angle *θ* thereby to lower the blade tip clearance height and bring the blade support plane back to the horizontal before commencing unloading the blades 10 from the rack arrangement 1, preferably by means of the crane 120.

The illustrated embodiments constitute examples of aspects of the invention. They are not to scale. The invention is not limited by the illustrated examples.

## Claims

1. Method for handling wind turbine blades (10) aboard a wind turbine installation vessel (100), said method comprising:
- providing on said vessel (100) a blade rack arrangement (1) configured to accommodate more than one blade (10), said rack arrangement (1) comprising at least a root rack (2) and a tip rack (3), each said root and tip rack (2, 3) being comprised of root or tip frame elements (4, 5), respectively, each frame element (4, 5) being configured to support a respective root or tip portion of a single blade (10)
- each said root and tip rack (2, 3) comprising multiple stacked frame elements (4, 5) in a column,
- wherein said root rack (2) and said tip rack (3) between them define a blade support plane (18), and
- loading wind turbine blades (10) onto said vessel (100);
- providing a jack assembly (30) acting between said vessel (100) and one of said root or tip rack (2, 3); and
- raising or lowering one of said root or tip rack (2, 3) aboard said vessel (100) by means of said jack assembly (30) to thereby move said blade support plane (18) through an elevation angle (*θ*), thereby changing the elevation angle (*θ*) of the blade support plane (18) such that the blade tips are raised.

2. Method according to claim 1, wherein the other one of said root or tip rack (2, 3) is substantially not raised or lowered.

3. Method according to claim 1, wherein the other one of said root or tip rack (2, 3) is positioned atop a static base frame (9) and is thereby supported at a height above a loading deck (11) of said vessel (100).

4. Method according to claim 1, each root or tip frame element (4, 5) being separably connectable to one or more adjacent frame elements (4, 5) in said root or tip rack (2, 3).

5. Method according to claim 1, additionally comprising providing a pivot (50) under the other one of said root or tip rack (2, 3).

6. Method according to any previous claim wherein said jack assembly (30) comprises a drive element and further comprises a rotatable rack spacer (55) capable of rotating between a lowered support position and a raised support position.

7. Method according to claim 1, wherein said elevation angle (*θ*) through which said blade support plane (18) is moved is of at least three degrees.

8. Method according to claim 1, further including providing a connecting boom (47) between said root rack (2) and said tip rack (3).

9. Method according to claim 1, said jack assembly (30) comprising a lifting platform (34) driven by a drive device and being positionable at a said root or tip rack (2, 3) to be raised or lowered.

10. Method according to claim 9, said jack assembly (30) further comprising a pivot (50) positionable at the other of said root or tip rack (2, 3) of said rack arrangement (1), said pivot (50) being rotatably coupled to said lifting platform (34) by a coupling linkage.

11. Method according to claim 10, wherein said coupling linkage is a boom (47).

12. Method according to claim 9, wherein said drive device is a linear drive (32) and is coupled to a rotatable rack spacer (55), said rack spacer (55) being rotatably coupled to a pivot joint (56) at said rack (2, 3) and being rotatably coupled to said linear drive (32).

13. Method according to claim 12 wherein said rotatable rack spacer (55) is configured to exhibit a raised rack support position and a lowered rack support position and wherein said jack assembly (30) is configured to rotate said rotatable rack spacer (55) between said raised and said lowered positions by means of said linear drive (32).

14. Method according to any preceding claim, wherein said blade tips extend over the edge of a loading deck (11) of said vessel (100).

15. Method according to claim 1, wherein in said raised position of said blade tips, said blades are thereby in a transport position, said method further including transporting said blades by said vessel (100).

## Patentansprüche

1. Verfahren zur Handhabung von Windkraftanlageblättern (10) an Bord eines Windkraftanlage-Errichterschiffs (100), das Verfahren umfassend:
- Bereitstellen einer Gestellbaugruppe für Blätter (1) auf dem Schiff (100), die zur Aufnahme von mehr als einem Blatt (10) konfiguriert ist, wobei die Gestellbaugruppe (1) mindestens ein Wurzelgestell (2) und ein Spitzengestell (3) umfasst, wobei jedes der Wurzel- und Spitzengestelle (2, 3) jeweils aus Wurzel- oder Spitzenrahmenelementen (4, 5) besteht, wobei jedes Rahmenelement (4, 5) dazu konfiguriert ist, einen jeweiligen Wurzel- oder Spitzenabschnitt eines einzigen Blatts (10) zu tragen,
- wobei jedes der Wurzel- und Spitzengestelle (2, 3) mehrere übereinander angeordnete Rahmenelemente (4, 5) in einer Säule umfasst,
- wobei das Wurzelgestell (2) und das Spitzengestell (3) gemeinsam eine Blatttragebene (18) definieren, und
- Laden von Windkraftanlageblättern (10) auf das Schiff (100);
- Bereitstellen einer Heberanordnung (30), die zwischen dem Schiff (100) und einem von dem Wurzel- oder Spitzengestell (2, 3) wirkt; und
- Heben oder Senken von einem von dem Wurzel- oder Spitzengestell (2, 3) an Bord des Schiffs (100) mittels der Heberanordnung (30), um so die Blatttragebene (18) um einen Höhenwinkel (*θ*) zu bewegen, wodurch der Höhenwinkel (*θ*) der Blatttragebene (18) derart verändert wird, dass die Blattspitzen gehoben werden.

2. Verfahren nach Anspruch 1, wobei das andere von dem Wurzel- oder Spitzengestell (2, 3) im Wesentlichen nicht gehoben oder gesenkt wird.

3. Verfahren nach Anspruch 1, wobei das andere von dem Wurzel- oder Spitzengestell (2, 3) auf einem feststehenden Untergestell (9) positioniert ist und dadurch in einer Höhe über dem Ladedeck (11) des Schiffs (100) gelagert ist.

4. Verfahren nach Anspruch 1, wobei jedes Wurzel- oder Spitzenrahmenelement (4, 5) mit einem oder mehreren benachbarten Rahmenelementen (4, 5) in dem Wurzel- oder Spitzengestell (2, 3) lösbar verbindbar ist.

5. Verfahren nach Anspruch 1, zusätzlich umfassend das Bereitstellen eines Drehpunkts (50) unter einem von dem Wurzel- oder Spitzengestell (2, 3).

6. Verfahren nach einem der vorstehenden Ansprüche, wobei die Heberanordnung (30) ein Antriebselement umfasst und weiter einen drehbaren Gestellabstandhalter (55) umfasst, der zwischen einer gesenkten Lagerposition und einer gehobenen Lagerposition drehbar ist.

7. Verfahren nach Anspruch 1, wobei der Höhenwinkel (*θ*) um den die Blatttragebene (18) bewegt wird, mindestens drei Grad beträgt.

8. Verfahren nach Anspruch 1, weiter beinhaltend das Bereitstellen eines Verbindungsauslegers (47) zwischen dem Wurzelgestell (2) und dem Spitzengestell (3).

9. Verfahren nach Anspruch 1, wobei die Heberanordnung (30) eine Hebeplattform (34) umfasst, die durch eine Antriebsvorrichtung angetrieben wird und an einem zu hebenden oder zu senkenden Wurzel- oder Spitzengestell (2, 3) positionierbar ist.

10. Verfahren nach Anspruch 9, wobei die Heberanordnung (30) weiter einen Drehpunkt (50) umfasst, der an dem anderen von dem Wurzel- oder Spitzengestell (2, 3) der Gestellbaugruppe (1) positionierbar ist, wobei der Drehpunkt (50) mit der Hebeplattform (34) durch ein Koppelgestänge drehbar gekoppelt ist.

11. Verfahren nach Anspruch 10, wobei das Koppelgestänge ein Ausleger (47) ist.

12. Verfahren nach Anspruch 9, wobei die Antriebsvorrichtung einen geradlinigen Antrieb (32) ist und mit einem drehbaren Gestellabstandhalter (55) gekoppelt ist, wobei der Gestellabstandhalter (55) mit einem Drehgelenk (56) an dem Gestell (2, 3) drehbar gekoppelt ist und mit dem geradlinigen Antrieb (32) drehbar gekoppelt ist.

13. Verfahren nach Anspruch 12, wobei der drehbare Gestellabstandhalter (55) dazu konfiguriert ist, eine gehobene Lagerposition des Gestells und eine gesenkte Lagerposition des Gestells aufzuweisen und wobei die Heberanordnung (30) dazu konfiguriert ist, mittels dem geradlinigen Antrieb (32) den drehbaren Gestellabstandhalter (55) zwischen der gehobenen und der gesenkten Position zu drehen.

14. Verfahren nach einem der vorstehenden Ansprüche, wobei sich die Blattspitzen über den Rand eines Ladedecks (11) des Schiffs (100) erstrecken.

15. Verfahren nach Anspruch 1, wobei sich die Blattspitzen in der gehobenen Position der Blattspitzen in einer Transportposition befinden, wobei das Verfahren weiter das Transportieren der Blätter mit dem Schiff (100) beinhaltet.

## Revendications

1. Procédé de manipulation de pales d'éolienne (10) à bord d'un navire d'installation d'éolienne (100), ledit procédé comprenant :
- la fourniture sur ledit navire (100) d'un agencement de râtelier de pale (1) configuré pour accueillir plus d'une pale (10), ledit agencement de râtelier (1) comprenant au moins un râtelier de racine (2) et un râtelier de bout (3), chaque dit râtelier de racine et de bout (2, 3) étant composé d'éléments de cadre de racine ou de bout (4, 5), respectivement, chaque élément de cadre (4, 5) étant configuré pour supporter une partie de racine ou de bout respective d'une pale unique (10)
- chaque dit râtelier de racine et de bout (2, 3) comprenant de multiples éléments de cadre empilés (4, 5) en une colonne,
- dans lequel ledit râtelier de racine (2) et ledit râtelier de bout (3) entre eux définissent un plan de support de pale (18), et
- le chargement de pales d'éolienne (10) sur ledit navire (100) ;
- la fourniture d'un ensemble vérin (30) agissant entre ledit navire (100) et l'un dudit râtelier de racine ou de bout (2, 3) ; et
- le levage ou l'abaissement de l'un dudit râtelier de racine ou de bout (2, 3) à bord dudit navire (100) au moyen dudit ensemble vérin (30) pour ainsi déplacer ledit plan de support de pale (18) sur un angle d'élévation (*θ*), changeant ainsi l'angle d'élévation (*θ*) du plan de support de pale (18) de sorte que les bouts de pale soient levés.

2. Procédé selon la revendication 1, dans lequel l'autre dudit râtelier de racine ou de bout (2, 3) n'est sensiblement pas levé ou abaissé.

3. Procédé selon la revendication 1, dans lequel l'autre dudit râtelier de racine ou de bout (2, 3) est positionné en haut d'un cadre de base statique (9) et est ainsi supporté à une hauteur au-dessus d'un pont de chargement (11) dudit navire (100).

4. Procédé selon la revendication 1, chaque élément de cadre de racine ou de bout (4, 5) pouvant être séparément raccordé à un ou plusieurs éléments de cadre adjacents (4, 5) dans ledit râtelier de racine ou de bout (2, 3).

5. Procédé selon la revendication 1, comprenant de surcroît la fourniture d'un pivot (50) sous l'autre dudit râtelier de racine ou de bout (2, 3).

6. Procédé selon l'une quelconque des revendications précédentes, dans lequel ledit ensemble vérin (30) comprend un élément d'entraînement et comprend en outre une entretoise de râtelier rotative (55) capable de tourner entre une position de support abaissée et une position de support levée.

7. Procédé selon la revendication 1, dans lequel ledit angle d'élévation (*θ*) sur lequel ledit plan de support de pale (18) est déplacé est d'au moins trois degrés.

8. Procédé selon la revendication 1, incluant en outre la fourniture d'une flèche de raccordement (47) entre ledit râtelier de racine (2) et ledit râtelier de bout (3).

9. Procédé selon la revendication 1, ledit ensemble vérin (30) comprenant une plateforme de soulèvement (34) entraînée par un dispositif d'entraînement et pouvant être positionnée au niveau dudit râtelier de racine ou de bout (2, 3) pour être levée ou abaissée.

10. Procédé selon la revendication 9, ledit ensemble vérin (30) comprenant en outre un pivot (50) pouvant être positionné à l'autre dudit râtelier de racine ou de bout (2, 3) dudit agencement de râtelier (1), ledit pivot (50) étant couplé en rotation à ladite plateforme de soulèvement (34) par une tringlerie de couplage.

11. Procédé selon la revendication 10, dans lequel ladite tringlerie de couplage est une flèche (47).

12. Procédé selon la revendication 9, dans lequel ledit dispositif d'entraînement est un entraînement linéaire (32) et est couplé à une entretoise de râtelier rotative (55), ladite entretoise de râtelier (55) étant couplée en rotation à une articulation pivot (56) au niveau dudit râtelier (2, 3) et étant couplée en rotation audit entraînement linéaire (32).

13. Procédé selon la revendication 12, dans lequel ladite entretoise de râtelier rotative (55) est configurée pour présenter une position de support de râtelier levée et une position de support de râtelier abaissée et dans lequel ledit ensemble vérin (30) est configuré pour faire tourner ladite entretoise de râtelier rotative (55) entre ladite position levée et ladite position abaissée au moyen dudit entraînement linéaire (32).

14. Procédé selon l'une quelconque des revendications précédentes, dans lequel lesdits bouts de pale s'étendent sur le bord d'un pont de chargement (11) dudit navire (100).

15. Procédé selon la revendication 1, dans lequel, dans ladite position levée desdits bouts de pale, lesdites pales sont ainsi dans une position de transport, ledit procédé incluant en outre le transport desdites pales par ledit navire (100).
